Europäisches Patentamt

European Patent Office

Office européen des brevets

(11) Publication number: 0 317 142
A1

## EUROPEAN PATENT APPLICATION

(21) Application number: 88310434.1

(22) Date of filing: 07.11.88

(51) Int. Cl.⁴: B65G 25/08 , B65G 65/44

(30) Priority: 13.11.87 NO 874754

(43) Date of publication of application:
24.05.89 Bulletin 89/21

(84) Designated Contracting States:
AT CH DE ES GB IT LI SE

(71) Applicant: SAXLUND A/S

N-4994 Akland(NO)

(72) Inventor: Wormli, Olav Per
Hasasv. 59C
N-4990 Sondeled(NO)

(74) Representative: Godwin, Edgar James et al
MARKS & CLERK 57-60 Lincoln's Inn Fields
London, WC2A 3LS(GB)

(54) Rod feeder.

(57) A rod feeder for transporting bulk material and
similar materials comprises a first ladder-like frame
(10) having transverse, approximately wedge-shaped
carrier rods (13) and being adapted for reciprocal
movement in its longitudinal direction above and
close to a stationary bottom surface (2). In a similar
way as barbs the carrier rods (13) provide for trans-
port of material only when the frame (10) is moved
in one direction. According to the invention there is
provided a similar second frame (20), the carrier
rods (23) of which are similar by shaped and ar-
ranged between and in substantially the same plane
as the carrier rods (13) of the first frame (10). How-
ever, the second frame is adapted to reciprocal
movement in opposition relative to the first frame
(10), thereby providing smoother transport.

EP 0 317 142 A1

## Rod Feeder

The invention relates to a rod feeder for transporting bulk material and similar materials, e.g. to an outlet opening at the bottom of a silo, in which a ladder-like first frame having at least one and preferably two parallel strings and transverse carrier rods is arranged for reciprocal movement in the longitudinal direction of the strings, close to and above a substantially horisontal bottom surface, each carrier rod having along one of its longitudinal edges a transport surface extending transversely to the bottom surface and pushing the material in front of it upon movement of the frame in one direction, and a sloping upper surface which tends to lift the material without substantially carrying it along horizontally upon movement in the opposite direction.

If the width or the stroke frequency of this known type of rod feeders cannot be increased in order to obtain a large capacity, the alternative remains to increase the length of stroke of the rod feeder. However, if the length of stroke is large, a lot of material will accumulate in front of the carrier rods, thereby to form piles of material which is inconvenient in many applications. The fact that the feeding is at relatively large intervals can also be a disadvantage.

For further background regarding rod feeders, reference is made to FI-PS No. 33319, Finnish published application No. 63380, and Swedish published application No. 376222.

The object of the invention is to provide a rod feeder of the above-mentioned type wherein the said drawbacks are at least reduced.

This is achieved by the features defined in the characterizing clause of claim 1.

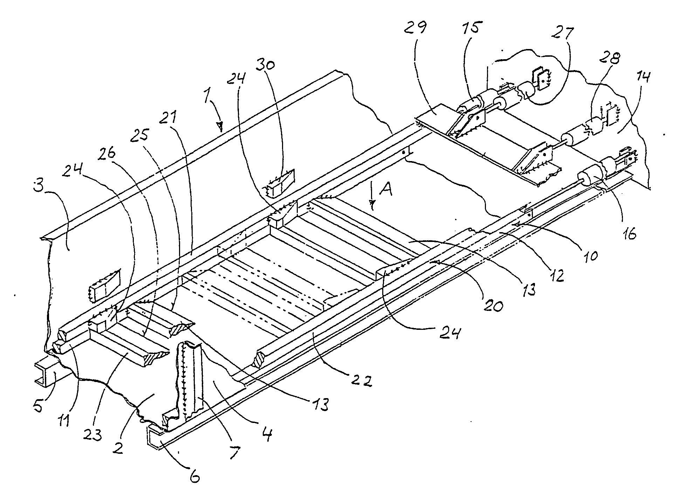

In the following the invention will be described in more detail, reference being had to the drawing, in which the only figure is a perspective view of an embodiment of a rod feeder according to the invention, parts of the feeder being cut away in order to show rear parts.

The rod feeder may be placed under a silo (not shown) or a similar device containing e.g. bulk material and may be arranged in a channel 1 having a substantially flat bottom 2 and upstanding side walls 3, 4. The channel may be made of sheet metal. For stiffening the channel metal sections such as channel sections 5, 6 may be fastened to the bottom 2 thereof, whereas angle bars 7 may be fastened to the sides 3, 4 thereof, e.g. by welding.

At the bottom 2 of the channel there is arranged a ladder-like, first frame 10, the strings 11, 12 of which extend close to the side walls 3 and 4 respectively. A number of equally spaced carrier rods 13 extending substantially in the same plane as the strings 11, 12, are welded to the strings.

Two double-acting, hydraulic cylinders 15, 16 are fastened to an end wall 14 of the channel 1. The piston rods of the hydraulic cylinders 15, 16 are fastened to respective strings 11, 12, such that the first frame 10 is reciprocally movable while sliding upon the bottom 2 of the channel.

Further, on the top of the first frame 10 there is provided a second, ladder-like frame 20, the strings 21, 22 of which having the same length as the respective strings 11, 12 of the first frame. A number of lugs 24 carrying carrier rods 23 are welded to opposed faces of the strings 21, 22 at intervals corresponding to the distance between the carrier rods of the first frame. The carrier rods 23 are positioned substantially in the same plane as the frame 10. The cross section of the carrier rods 13, 23 is substantially wedge-shaped, and the narrow or sharp edge 25 and 26, respectively, thereof is facing opposite of the desired transport direction. The surface of the carrier rods 13, 23 facing the bottom 2 of the channel, preferably extends parallel thereto, and the surface of the carrier rods 13, 23 opposite of the narrow edge 25, 26 preferably extends perpendicular to the bottom 2. The carrier rods 23 are somewhat shorter than the carrier rods 13. A small clearance thus exists between the ends of the carrier rods 23 and the strings 11 and 12, respectively.

To the end wall 14 of the channel 1 there is secured two double-acting hydraulic cylinders 27, 28 whose piston rods are connected to the strings 21, 22 through a rod or plate 29 which is welded to the strings 21, 22. The carrier rods 23 of the second frame 20 are arranged between the carrier rods 13 of the first frame. Further, the strokes of the hydraulic cylinders may be somewhat shorter than half the distance between the carrier rods 13 and 23, respectively, less the width of the carrier rods 13, 23, and the pairs of cylinders 15, 16 and 27, 28, respectively, are adapted to be driven in opposition by means of per se known control systems, so that mutually adjacent rods 13 and 23, respectively, of each frame are reciprocally movable without the rods of one frame touching the rods of the other frame. The second frame 20 is adapted to slide upon the first frame 10, which in turn is adapted to slide upon the bottom 2. By means of glue, rivets or similar means thin strips (not shown) of e.g. plastic material having good sliding properties may be fastened to the bottom 2 under the strings 11, 12 and to the surface of the strings 21, 22 facing the strings 11, 12, so that the first frame extends somewhat above the bottom 2 and the friction between the frames 10, 20 and between the first frame 10 and the bottom 2 will be small. Alternatively, the frames may be supported on rollers or the like.

The function of the rod feeder is as follows. The bulk material or the like which is to be conveyed by the rod feeder, is supplied thereto at the portion thereof indicated by the arrow A, or from above along the whole length of the rod feeder. During retraction of the piston rods of the cylinders 15, 16 the carrier rod 13 closest to these cylinders will be pressed into, possibly further into, the bulk material. Since the resistance exerted by the bulk material on the carrier rod is small, the bulk material will remain stationary. At the same time the piston rods of the cylinders 27, 28 are extended, so that the second frame 20 is moved in the opposite direction, whereby the carrier rods 23 thereof are moved in the transport direction. When the first stroke is completed, the piston rods of the cylinders 15, 16 are extended from and the piston rods of the cylinders 27, 28 are retracted into the respective cylinders, such that the bulk material present on the side of the carrier rods 13 facing away from the cylinders, is moved by these rods in the transport direction of the rod feeder, the carrier rods 23 of the second frame being pulled into and under further bulk material. During the next stroke the first operating step is repeated, whereby the already transported bulk material is moved further on in the transport direction by a carrier rod of the second frame, whereas the carrier rods of the first frame are again forced into the material which has been supplied to the channel. Thus during the following operating steps the material is transported alternately by the first and the second frame.

Thus, in the rod feeder according to the invention material will be transported continuously during operation, which is advantageous in feeding grinders, mills, destructor furnace plants, further conveyers and similar apparatus in which a substantially uniform feeding is required.

The rod feeder is described above in connection with bulk material, but it is particularly suited for transporting, feeding or dosing larger parts such as pallets, plates, knots etc. In order to prevent to some extent transport of material in a direction opposite to the desired direction, a number of wedge-shaped blocks 30, the narrow edge of which is facing in the same direction as the narrow edge of the carrier rods, may be welded to the inner surface of the side walls 3, 4 of the channel.

If the travel of each frame corresponds to approximately half the travel of the known rod feeder, the amount of material which is transported and thereby possibly compressed or piled, respectively, in front of the carrier bars during the transport stroke, will correspond to approximately half the amount of material transported by the carrier bars of the previously known device, provided that the rate of flow of material is the same. The thickness of the layer of material will therefore be smaller, and the material will be better distributed, which is of great importance when using the rod feeder in connection with furnaces or driers in which it is very important that the layer of material is uniformly distributed over the entire grate.

## Claims

A rod feeder for transporting bulk material and similar materials, e.g. to an outlet opening at the bottom of a silo, in which a ladder-like first frame (10) having at least one and preferably two parallel strings (11, 12) and transverse carrier rods (13) is arranged for reciprocal movement in the longitudinal direction of the strings, close to and above a substantially horizontal bottom surface (2), each carrier rod (13) having along one of its longitudinal edges a transport surface extending transversely to the bottom surface and pushing the material in front of it upon movement of the frame in one direction, and a sloping upper surface which tends to lift the material without substantially carrying it along horizontally upon movement in the opposite direction, characterized in that a similar second frame (20) the strings (21, 22) of which are parallel to the string or strings (11, 12) of the first frame, and facing in the same direction as the transport surface of the adjacent carrier rod (13) of the first frame, is provided for reciprocal movement relative to both the bottom surface (2) and the first frame (10), the carrier rods (23) of the second frame (20) being arranged between the carrier rods (13) of the first frame (10) and in substantially the same plane as these carrier rods, and that means for moving the frames are adapted to move frames in opposition.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-A-2 554 274 (WESTFALIA)<br>* Page 14, line 5 - page 18, line 18; figures 1-5 *<br>----- | 1 | B 65 G 25/08<br>B 65 G 65/44 |

**TECHNICAL FIELDS SEARCHED (Int. Cl.4)**

B 65 G

The present search report has been drawn up for all claims

| Place of search | Date of completion of the search | Examiner |
|---|---|---|
| THE HAGUE | 01-02-1989 | OSTYN T.J.M. |